# EUROPEAN PATENT SPECIFICATION

(11) **EP 3 143 919 B1**
(45) Date of publication and mention of the grant of the patent: **29.06.2022**
(21) Application number: 16189176.7
(22) Date of filing: 16.09.2016
(51) Int. Cl.: A47L 13/20, A47L 13/51

(54) **MOPPING LAYER CONTAINER**
MOPBEHÄLTER
CONTENEUR DE SERPILLÈRES

(30) Priority: 18.09.2015 GB 201516578
(43) Date of publication of application: 22.03.2017
(73) Proprietor: NUMATIC INTERNATIONAL LIMITED, Camberley Surrey GU15 3SY (GB)
(72) Inventor: Duncan, Christopher, Chard, Somerset TA20 3BH (GB); Phillips, Stephen, Chard, Somerset TA20 3BG (GB)
(74) Representative: CSY London

(56) References cited:
- EP-A1- 2 311 361
- EP-A2- 1 262 139
- DE-A1-102009 048 897
- US-A1- 2005 252 921

## Description

The present invention relates to a container for wetting mopping layers.

A common type of mop for cleaning comprises an elongate handle, a flat mop head and a removable mopping layer attached to an underside of the mop head. Such mopping layers are generally rectangular in plan view and formed from a layer of absorbent material. The mopping layer may be soaked in a cleaning liquid prior to use. When a large area is being cleaned, the mopping layer may become soiled before the whole area has been cleaned. For this reason it is common to prepare several mopping layers prior to cleaning. Once one mopping layer is soiled, it is removed from the mop head and replaced with a clean pre-wetted mopping layer. This process can be repeated several times during cleaning.

When pre-wetting mopping layers it is desirable to ensure that they are evenly wetted with a desired amount of cleaning liquid. It is also desirable to provide an efficient process for preparing several mopping layers which are all wetted to the same degree.

A prior art bucket for pre-wetting mopping layers is disclosed in GB 2478242 A. The bucket contains grooves in its base. Cleaning solution poured into a central region of the bucket flows into grooves which distribute the liquid over the base of the bucket. The lower edges of folded mopping layers which are stacked in the bucket absorb cleaning solution which is in the grooves. The cleaning solution eventually soaks the whole mopping layers by capillary action. The mopping layers are stacked on their sides in the bucket. This is disadvantageous for hands-free use in sterile environments because, when the lid is removed, the mopping layers cannot be easily attached to a mop head whilst still in the bucket. They must be removed and laid flat before they are attached to a mop head.

The document EP1262139A2 discloses a container in which a liquid reservoir is arranged parallel to mopping layers contained within the container. The mopping layers are not evenly or quickly wetted by liquid leaving the reservoir because the liquid will only initially impinge upon a single mop layer when it leaves the reservoir.

In a first aspect the invention provides a container according to claim 1.

The opening allows a user to remove mopping layers after they have been wetted. It also allows them to deposit dry mopping layers inside the volume so that they can be wetted. Once dry mopping layers have been placed inside the volume, flat on the base of the container, the lid can be sealed to prevent liquid inside the volume from leaking. Preferably the opening is large enough for a mopping layer to be removed in a completely unfolded configuration. The opening may therefore be at least 30 cm long by at least 5 cm wide. Preferably the opening is at least 40 cm long by at least 10 cm wide. The opening may be rectangular. Preferably the opening defines a plane which is parallel to the base portion of the container.

Liquid present in the compartment volume may enter the volume for accommodating the stack of mopping layers via the orifices. The divider may be a solid surface, provided with a plurality of holes or slots through which liquid may flow into the volume. The function of the orifices is to distribute liquid entering the volume for accommodating the stack of mopping layers evenly over an area so that any mopping layers which are stacked in the volume are evenly wetted. Preferably the orifices are able to distribute liquid over an area which is greater than 200 cm², and preferably greater than 450 cm².

The divider is generally vertically orientated so that when the container is upstanding liquid present gradually trickles horizontally from the compartment, and when the container is laid on its side with the compartment above the divider and the divider above the mopping layers, the liquid present trickles down onto the mopping layers. This orientation of the divider ensures that when the liquid hits an upper part of a mopping layer in the volume, the action of gravity will aid in the wetting of the mopping layer as the liquid soaks downwards. This mode of wetting is much faster than previous mopping layer wetting containers which relied upon capillary action for mopping layers to soak up liquid from a trough positioned below stacked mopping layers.

An aperture may be provided in the container which communicates with the compartment, permitting charging of the compartment with a liquid for wetting the mopping layers.

The aperture may be provided through a sidewall of the container which abuts the compartment. The aperture may be provided at an upper region of the sidewall. This ensures that when the container is in an upright orientation, liquid in the compartment volume does not exit the compartment volume via the aperture.

The aperture may be provided as a cut-out portion of the sidewall.

The divider may comprise a plate having a distribution of pores which covers a full stack of mopping layers when present in the container. This ensures even wetting of the mopping layers.

The divider may be provided with orthogonally dispersed rows and columns of pores. This ensures even wetting of the mopping layers.

The size and/or number of pores may be selected to limit the rate of liquid passage through the divider to a desired wetting time.

The compartment may be defined by an insert which is removable from the container, which insert provides or includes the said divider. This enables easy cleaning of the container.

The container opposite sidewalls may be provided with engaging features which define a tipping axis which is parallel to the base portion of the container and which is also parallel to the divider. This enables the engagement of features such as a handle or other support, to enable easy tipping of the container. The engaging features may be adapted to be engaged with a support which holds the container above a floor surface.

In preferred embodiments liquid may be poured into the compartment when the opening of the volume is sealed by the lid. This enables liquid to start flowing into the volume for accommodating the stack of mopping layers as soon as it is poured into the compartment, without the need to first seal the lid.

The container may further comprise a protrusion, provided on a lower region of a sidewall of the container, for retaining or supporting the container when laid on its side in an orientation in which the base portion is generally vertical and the divider is generally horizontal. The protrusion may be configured to engage with a portion of a support, for example part of a trolley for supporting the container above a floor surface. The protrusion may be provided with a radius portion which enables it to engage smoothly with a latching feature or to form a stable support upon an uneven surface.

The lid may be provided with a depressed portion which serves as a stop which, when the lid seals the opening, constrains a full stack of mopping layers between the lid and the tray of the base portion within the volume. Constraining the mopping layers assists in even wetting.

The lid of the container may be provided with recesses which are adapted to cooperate with feet on the base of a further container, so that the further container can be stacked on the lid.

In a second aspect of the invention there is provided a combination of a container as described herein and a mopping layer, wherein the mopping layer is generally rectangular in plan view, disposed within the volume of the container, and lying flat relative the base portion of the volume. The fact that the mopping layer(s) lie flat (ie. not folded) on the base portion ensures that they are easily connected to a mop head inserted through the opening.

Embodiments of the invention will now be described with reference to the figures of the drawings, in which;
Figure 1 shows a perspective view of a container according to the invention and a mopping layer.
Figure 2 shows a perspective view of a combination of a container and mopping layers according to the present invention.
Figure 3 shows a perspective view of a combination of a container and mopping layers according to the invention with the lid in a closed configuration.
Figure 4 shows an exploded perspective view of a container according the present invention and a mopping layers.
Figure 5 shows a cross sectional side view of a container and mopping layers according to the invention, taken along the line V-V in figure 3.
Figure 6 shows a perspective view of the underside of the cross section shown in figure 5.
Figure 7 is a perspective view of a container according to the invention. The container is provided with a handle.
Figure 8 shows a perspective view of a stack of three of the containers shown in figure 7.

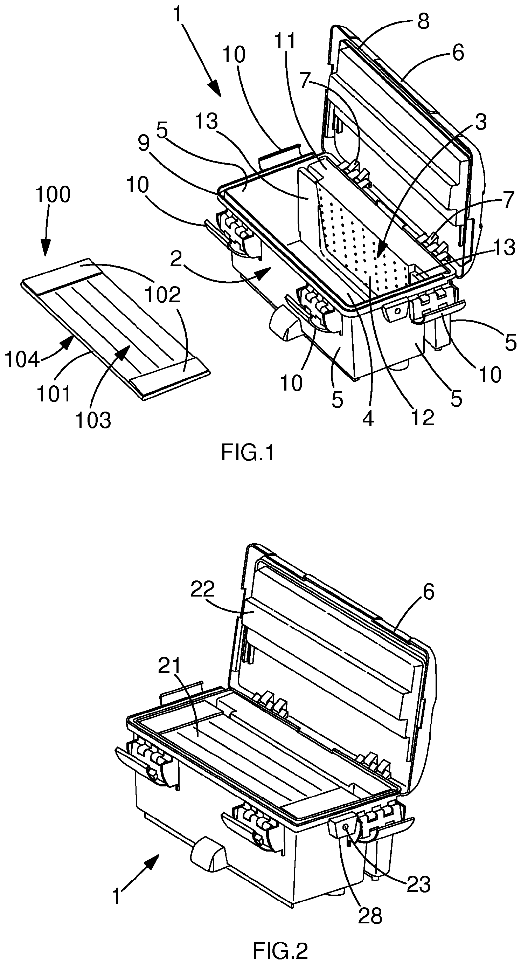

Figure 1 shows a container 1 and a mopping layer 100. The mopping layer is a rectangular cloth 101 which is provided with attachment means 102 at either end of its upper surface 103. The attachment means enable the mopping layer to be attached to a mop head. The lower surface 104 of the mopping layer is the part of the mopping layer which comes into contact with a surface being cleaned.

The container 1 comprises a bucket portion 2 which defines a generally cuboid volume 3 having an open upper face. The bucket portion 2 comprises a rectangular base 4 and four vertical sidewalls 5. Since the bucket portion 2 is a generally cuboid, two of the sidewalls are longer than the other two sidewalls. Mopping layers may be stacked one on top of the other in the bucket portion 2 so that they lie flat on the base 4. The bucket portion 2 is provided with a lid 6 which is attached via two hinges 7 to the upper edge of one of the longer sidewalls 5. The lid is provided with a rim 8 which, when the lid is closed, cooperates with a rim 9 provided around the upper edges of the sidewalls 5, to form a watertight seal. The upper edges of the sidewalls (to which the hinges are not attached) are provided with latches 10 which enable the lid to be retained in a closed configuration and maintain a watertight seal between the rim 8 and rim 9. The upper edge of one of the long sidewalls 5 is provided with two equally spaced latches 10. The short sidewalls are each provided with one latch 10. The lid 6 of the container is provided with corresponding recesses with which the latches are engageable.

Inside the bucket portion 2 there is provided an insert 11. The insert defines a generally rectangular cuboid compartment (not shown) which forms a reservoir for cleaning liquid used to pre-wet mopping layers. The compartment is the same length as the base of the bucket portion, with respect to the long sidewalls. The insert 11 sits inside the volume 3 and parallel to the long sidewall 5 to which the hinges 7 are attached. The compartment extends from the base 4 of the bucket portion to the upper edge of the sidewall 5.

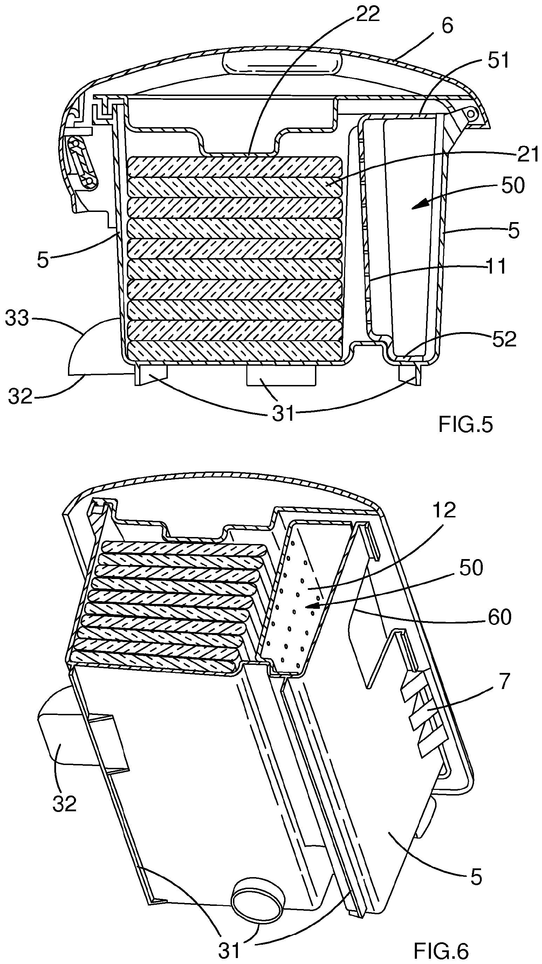

The insert 11 comprises a divider 12. The divider 12 covers the whole of a face of the compartment which faces away from the sidewall 5 (to which the hinges 7 are attached). The divider is provided with an array of regularly spaced holes which allow liquid in the compartment to flow into the volume 3 defined by the bucket portion 2 of the container 1. The divider defines a flat surface which is perpendicular to the base 4 of the bucket portion 2. The compartment is provided with an aperture (not shown) through which liquid may be introduced into the compartment. The aperture is provided in the sidewall 5 to which the hinges 7 are attached. The aperture is shown in figure 6.

The insert is retained in its upstanding orientation in the bucket portion 2 by ribs 13 which extend from each of the short sidewalls 5 into the internal volume 3 defined by the bucket portion 2. The ribs 13 are integrally moulded in the short sidewalls 5. The insert 11 is removable from the bucket portion 2. The insert 11 may be inserted into the bucket portion 2 to form the compartment by slotting the insert 11 between the ribs 13 and the long sidewall 5 to which the hinges 7 are attached.

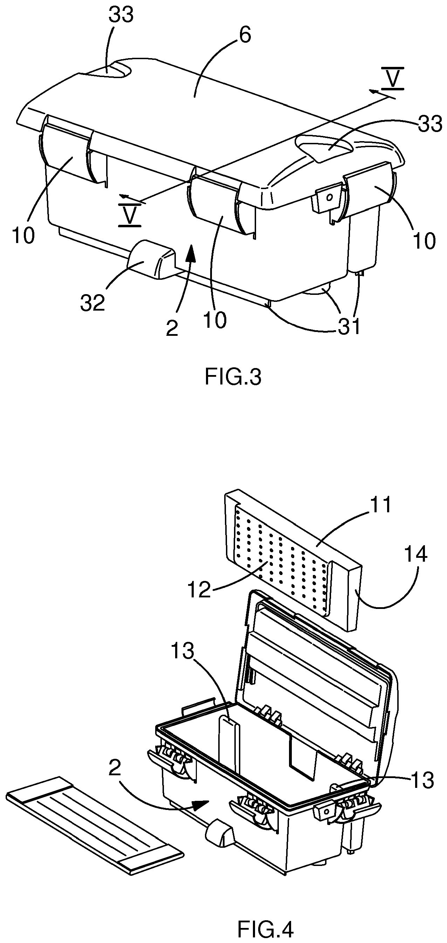

Figure 4 shows the insert 11 when removed from the bucket portion 2. Recesses 14 are visible. The ribs 13 are shown within the volume 3. When the insert 11 is slotted into the bucket portion 2, the ribs 13 are received by the recesses 14 on the insert 11.

Figure 2 shows a container 1 which is filled with a stack of mopping layers 21. The divider (not shown) of the insert 11 lies flush to the edges of the mopping layers 21. The mopping layers 21 lie perpendicular to the divider and flat upon the base (not shown).

The underside of the lid 6 is provided with a protrusion 22 which runs from one short end of the lid 6 to the other short end of the lid 6. The protrusion has a 'T' shaped cross section. When the lid 6 is in a closed configuration, the protrusion abuts the top mopping layer in the stack of mopping layers 21. This reduces movement of mopping layers in the volume 3, which assists with even wetting.

The container 1 is provided with engagement means 28 at the middle of the upper edges of each of the short sidewalls 5. Only one engagement means is shown. The engagement means comprise a generally square protrusion on the external face of the respective sidewall 5. The protrusion is provided with a circular hole 23. The circular hole 23 on each of the engagement means 28 is adapted to receive an axle (not shown) which may be used to suspend the container above a floor surface. The engagement means 28 are positioned on their respective sidewalls 5 so that their holes define an axis about which (when suspended) the container 1 may be tipped. The axis is parallel to the divider 12 and also parallel to the base 4 of the container.

Figure 3 shows the container 1 with the lid 6 in a closed configuration. The latches 10 are in the closed watertight configuration. The container 1 is provided with feet 31 on the underside of the base 4. These feet 31 contact a surface on which the container is placed to ensure that the container is stable. The upper face of the lid 6 of the container is provided with generally semi-circular recesses near the edges of the short sides of the lid 6. These recesses are adapted to cooperate with the feet 31 of a second container (not shown) when the second container is stacked on the lid 6 of the container 1. This ensures that a stable stack of containers can be made when several containers are not in use. The container is also provided with a protrusion 32 which acts as a foot to stabilize the container when it is in a tipped orientation in which the insert 11 and therefore also the divider 12 are in a horizontal orientation. The protrusion 32 is disposed on the long sidewall 5 of the container 1 which comprises the latches, at the midpoint of the sidewall and near to the base 4. When the container is tipped so that the insert 11 and therefore also the divider 12 are in a horizontal orientation, the container may be rested upon a floor surface so that the two latches 10 on the long sidewall 5 and the protrusion 32 are the points of contact with the floor surface. This forms a stable tripod. When the container is suspended by a support which is engaged with the engaging means 28, the protrusion 32 may also be engaged with a portion of a support (not shown) to retain the container in the tipped orientation.

Figure 5 shows a cross sectional view along the line V-V in figure 3. The compartment 50 formed by the insert 11 is shown. The protrusion 22 of the lid 6 which abuts the upper mopping layer in the stack of mopping layers 21 is also shown. The protrusion 32 is provided with a radius 33. This enables the protrusion to engage smoothly with a latching feature on a support (not shown). The insert 11 is formed from a moulded piece of plastic. The insert comprises the face which forms the divider and sidewalls 51 and 52 which extend from the divider 12 face to the sidewall 5. The sidewalls 51 and 52 of the insert 11 ensure that when the container is tipped so that the divider is horizontal, the sidewalls form a pool for liquid which is poured into the compartment.

Figure 6 shows a perspective view of the underside of the cross section shown in figure 5. The holes of the divider 12 are visible. As discussed in relation to figure 1, the compartment 50 is provided with a square aperture 60. The aperture 60 is formed in a region of the long sidewall 5 which is near to the hinges 7. It is through the aperture 60 that liquid, for example cleaning solution, may be introduced into the compartment 50.

In use, an empty container is placed on a floor surface or suspended by a support engaged with the engaging means 28. Unfolded mopping layers are introduced into the empty container 1 so that they lie parallel with the base 4 to form a stack upon the base 4. The lid 6 of the container is then closed and the latches 10 are secured to form a watertight seal between the lid 6 and the bucket portion 2. The container is then tipped about the axis defined by the engaging portions. This axis is parallel to the base 4 and also parallel to the divider 12. The container is tipped until the base (and mopping layers) adopt a vertical orientation and the divider 12 adopts a horizontal orientation. The container is rested upon a floor in this orientation or held in position by a support acting in concert with the protrusion 32. Cleaning solution is then poured through the aperture 60 and into the compartment 50.

In this tipped orientation, when the cleaning solution is introduced into the compartment 50 it will form a pool in the compartment and gradually flow under the action of gravity through the holes in the divider 12 and into the internal volume 3 where it will impact the upper edges of mopping layers 21 stacked flat on the base 4 of the container. The liquid will be distributed evenly over all of the mopping layers 21 by the holes in the divider 12. Once the liquid has contacted the mopping layers 21, it will seep downwards over the whole body of the mopping layers, under gravity. This provides a more efficient absorption process than relying on capillary action to permit the liquid to seep upwards from the base of a container.

Once all of the liquid has exited the compartment 50 and sufficient time has been given for the mopping layers to be evenly wetted, the container is returned to its upright orientation, in which the base 4 is parallel to a floor surface (either attached to a support or placed upon a floor surface). When placed on a floor surface in the upright orientation, the feet 31 contact the floor. The latches 10 are undone and the lid 6 is folded back to allow access to the mopping layers. It is advantageous that the mopping layers in this orientation of the container lie flat upon the base. The opening of the container is parallel to the base and the mopping layers can therefore be attached to a mop head without further manipulation such as unfolding, or removal from the container.

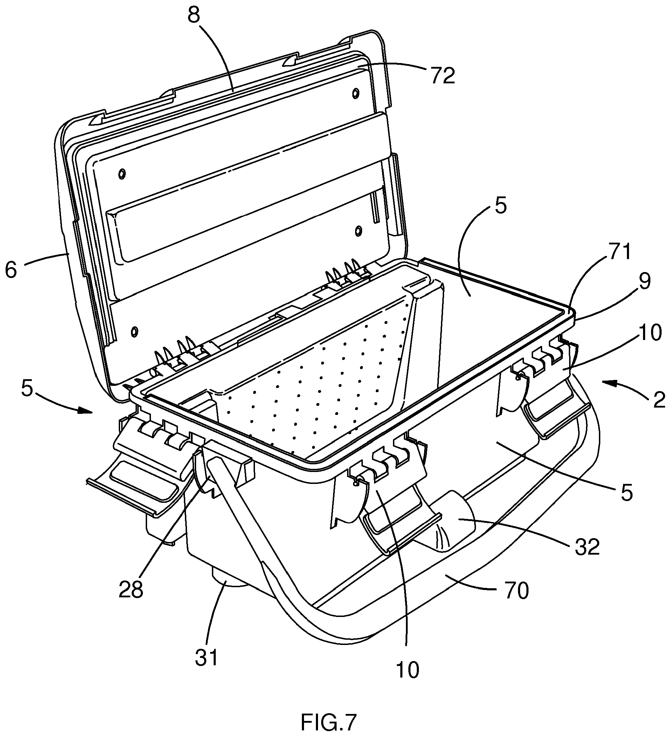

Figure 7 shows a container according to the invention. The container is formed from a moulded plastic material. The features of the container are generally the same as the features of the container shown in figures 1-6. The container shown in figure 7 is however provided with a C plan handle 70, which is attached at both of its ends to the engagement means 28. In use a user can lift the (closed) container with one hand using the handle. They can then use their other hand to tip the container so that the protrusion 32 and the latches 10 on the long sidewall 5 face towards a floor surface. The container can then be set down on the floor surface. The aperture (not shown) in the back sidewall 5 of the container will then be facing upwards and ready to accept cleaning solution. The container is provided with feet 31 which form a stable platform when the container is resting in an upright orientation on a floor surface. The container is provided with rubber seals 71 and 72 which run around the rims 8 and 9 of the lid 6 of the container and the sidewalls 5 respectively. When the lid is closed the rubber seals 71 and 72 form a watertight seal between the lid 6 and the bucket portion 2 of the container.

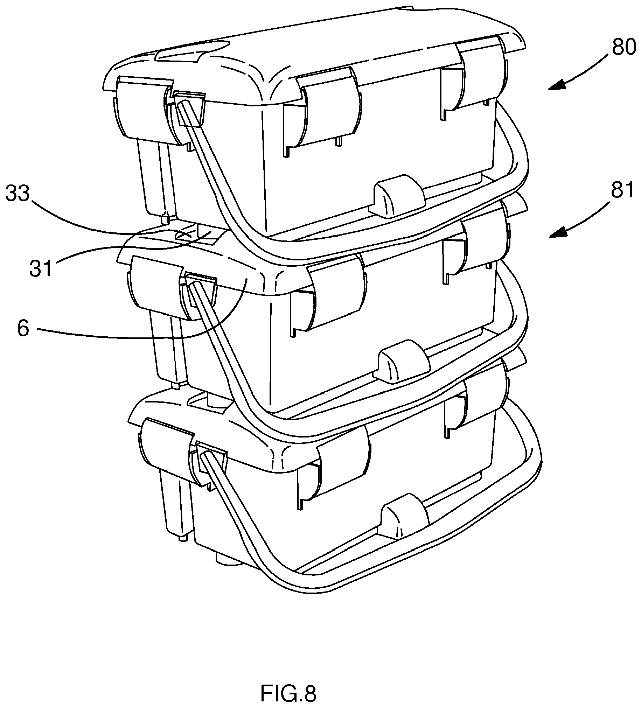

Figure 8 shows a stack of three of the containers shown in figure 7. The feet 31 of an upper container 80 cooperate with the recesses 33 in the lid 6 of a lower container 81 in the stack. The cooperation between containers in the stack forms a stable stack and permits easy storage of the containers when not in use.

## Claims

1. A container (1) which comprises;
a generally horizontal base portion (4) and generally upstanding sidewalls (5) which define a volume (3) for accommodating a stack of mopping layers (100, 21) before use, the base portion defining a tray upon which said mopping layers may be vertically stacked one on top of the other,
an opening in an upper region of the container for access in turn to each of the stacked mopping layers which are accommodated in the volume,
an openable watertight lid arrangement (6) for sealing the opening, and
a compartment (50) in the volume which includes a divider (12) for separating the volume to be occupied by the stack of mopping layers from the compartment volume, said divider being provided with a dispersed array of orifices through which liquid in the compartment may flow in a controlled and distributed manner to wet the stacked mopping layers,
**characterized in that** the divider is generally vertically orientated so that, when the container is upstanding, liquid present gradually trickles horizontally from the compartment, and when the container is laid on its side with the compartment above the divider and the divider above the mopping layers, the liquid present trickles down onto the mopping layers.

2. A container according to claim 1 wherein an aperture (60) is provided in the container which communicates with the compartment (50), permitting charging of the compartment with a liquid for wetting the mopping layers (21).

3. A container according to claim 2 wherein the aperture is provided through a sidewall of the container which abuts the compartment.

4. A container according to claim 3 wherein the aperture is provided at an upper region of the sidewall.

5. A container according to any of claims 2 to 4 wherein the aperture is provided as a cut-out portion of the sidewall.

6. A container according to any preceding claim wherein the divider comprises a plate having a distribution of pores which covers a full stack of mopping layers when present in the container.

7. A container according to claim 6 wherein the divider is provided with orthogonally dispersed rows and columns of pores.

8. A container according to either of claims 6 or 7 wherein the size and/or number of pores is/are selected to limit the rate of liquid passage through the divider to a desired wetting time.

9. The container according to any preceding claim wherein the compartment is defined by an insert (11) which is removable from the container, which insert provides or includes the said divider.

10. The container according to any preceding claim wherein the container opposite sidewalls are provided with engaging features (28) which define a tipping axis which is parallel to the base portion of the container and which is also parallel to the divider.

11. The container according to any preceding claim wherein liquid may be poured into the compartment when the opening of the volume is sealed by the lid.

12. The container according to any preceding claim further comprising a protrusion (32), provided on a lower region of a sidewall of the container, for retaining or supporting the container when laid on its side in an orientation in which the base portion is generally vertical and the divider is generally horizontal.

13. A container according to any of the preceding claims wherein the lid is provided with a depressed portion (22) which serves as a stop which, when the lid seals the opening, constrains a full stack of mopping layers between the lid and the tray of the base portion within the volume.

14. A combination of a container according to any of the preceding claims and a mopping layer (100, 21), wherein the mopping layer is generally rectangular in plan view, disposed within the volume of the container, and lying flat relative the base portion of the volume.

## Patentansprüche

1. Behälter (1), der Folgendes umfasst:
einen im Allgemeinen horizontalen Grundabschnitt (4) und im Allgemeinen aufrechte Seitenwände (5), die ein Volumen (3) zur Unterbringung eines Stapels von Wischbezügen (100, 21) vor der Verwendung definieren, wobei der Grundabschnitt eine Schale definiert, auf der die Wischbezüge vertikal übereinander gestapelt werden können,
eine Öffnung in einem oberen Bereich des Behälters für den Zugang zu jedem der gestapelten Wischbezüge nacheinander, die in dem Volumen untergebracht sind,
eine zu öffnende wasserdichte Deckelanordnung (6) zum Verschließen der Öffnung und
ein Fach (50) in dem Volumen, das eine Trennwand (12) beinhaltet, um das Volumen, das von dem Stapel von Wischbezügen zu belegen ist, von dem Fachvolumen abzutrennen, wobei die Trennwand mit einem Feld verteilter Öffnungen versehen ist, durch die Flüssigkeit in dem Fach in einer kontrollierten und verteilten Weise strömen kann, um die gestapelten Wischbezüge zu befeuchten,
**dadurch gekennzeichnet, dass** die Trennwand im Allgemeinen vertikal ausgerichtet ist, so dass vorhandene Flüssigkeit schrittweise horizontal aus dem Fach sickert, wenn der Behälter aufrecht steht, und die vorhandene Flüssigkeit nach unten auf die Wischbezüge sickert, wenn der Behälter mit dem Fach über der Trennwand und der Trennwand über den Wischbezügen auf seine Seite gelegt wird.

2. Behälter nach Anspruch 1, wobei in dem Behälter eine Öffnung (60) bereitgestellt ist, die mit dem Fach (50) in Verbindung steht, was das Füllen des Fachs mit einer Flüssigkeit zum Befeuchten der Wischbezüge (21) gestattet.

3. Behälter nach Anspruch 2, wobei die Öffnung durch eine Seitenwand des Behälters bereitgestellt ist, die an das Fach grenzt.

4. Behälter nach Anspruch 3, wobei die Öffnung in einem oberen Bereich der Seitenwand bereitgestellt ist.

5. Behälter nach einem der Ansprüche 2 bis 4, wobei die Öffnung als ein ausgeschnittener Abschnitt der Seitenwand bereitgestellt ist.

6. Behälter nach einem der vorhergehenden Ansprüche, wobei die Trennwand eine Platte umfasst, die eine Porenverteilung aufweist, die einen gesamten Stapel von Wischbezügen abdeckt, wenn diese in dem Behälter vorhanden sind.

7. Behälter nach Anspruch 6, wobei die Trennwand mit rechtwinkelig verteilten waagerechten und senkrechten Reihen von Poren versehen ist.

8. Behälter nach einem der Ansprüche 6 oder 7, wobei die Größe und/oder Anzahl der Poren dafür ausgewählt sind/ist, die Geschwindigkeit der Flüssigkeitspassage durch die Trennwand auf eine gewünschte Befeuchtungszeit zu beschränken.

9. Behälter nach einem der vorhergehenden Ansprüche, wobei das Fach durch einen Einsatz (11) definiert ist, der aus dem Behälter entnehmbar ist, wobei der Einsatz die Trennwand bereitstellt oder beinhaltet.

10. Behälter nach einem der vorhergehenden Ansprüche, wobei die gegenüberliegenden Seitenwände des Behälters mit Eingriffsmerkmalen (28) versehen sind, die eine Kippachse definieren, die parallel zu dem Grundabschnitt des Behälters liegt und die außerdem parallel zu der Trennwand liegt.

11. Behälter nach einem der vorhergehenden Ansprüche, wobei Flüssigkeit in das Fach gegossen werden kann, wenn die Öffnung des Volumens durch den Deckel verschlossen ist.

12. Behälter nach einem der vorhergehenden Ansprüche, ferner umfassend einen Vorsprung (32), der in einem unteren Bereich einer Seitenwand des Behälters bereitgestellt ist, um den Behälter zu halten oder zu stützen, wenn er in einer Ausrichtung, in welcher der Grundabschnitt im Allgemeinen vertikal liegt und die Trennwand im Allgemeinen horizontal liegt, auf seiner Seite liegt.

13. Behälter nach einem der vorhergehenden Ansprüche, wobei der Deckel mit einem vertieften Abschnitt (22) versehen ist, der als ein Anschlag dient, der, wenn der Deckel die Öffnung verschließt, einen vollständigen Stapel von Wischbezügen zwischen dem Deckel und der Schale des Grundabschnitts in dem Volumen hält.

14. Kombination aus einem Behälter nach einem der vorhergehenden Ansprüche und einem Wischbezug (100, 21), wobei der Wischbezug in der Draufsicht im Allgemeinen rechteckig ist, in dem Volumen des Behälters angeordnet ist und relativ zum Grundabschnitt des Volumens flach liegt.

## Revendications

1. Contenant (1) qui comporte :
une partie formant base généralement horizontale (4) et des parois latérales généralement verticales (5) qui définissent un volume (3) servant à des fins de réception d'une pile de couches de nettoyage (100, 21) avant toute utilisation, la partie formant base définissant un bac sur lequel lesdites couches de nettoyage peuvent être empilées à la verticale les unes par-dessus les autres,
une ouverture dans une région supérieure du contenant servant à des fins d'accès tour à tour à chacune de couches de nettoyage empilées qui sont reçues dans le volume,
un agencement de couvercle étanche ouvrable (6) servant à fermer l'ouverture, et
un compartiment (50) dans le volume qui comprend une pièce de séparation (12) servant à séparer le volume destiné à être occupé par la pile de couches de nettoyage du volume du compartiment, ladite pièce de séparation comportant une série d'orifices dispersés au travers desquels un liquide dans le compartiment peut s'écouler d'une manière contrôlée et distribuée pour humidifier les couches de nettoyage empilées,
**caractérisé en ce que** la pièce de séparation est orientée généralement à la verticale de telle sorte que, quand le contenant est à la verticale, le liquide présent s'écoule progressivement goutte à goutte à l'horizontale en provenance de compartiment, et quand le contenant est reposé sur son côté, le compartiment étant au-dessus de la pièce de séparation et la pièce de séparation étant au-dessus des couches de nettoyage, le liquide présent s'écoule goutte à goutte vers le bas jusque sur les couches de nettoyage.

2. Contenant selon la revendication 1, dans lequel une fente (60) est mise en œuvre dans le contenant qui communique avec le compartiment (50), ceci permettant de charger, dans le compartiment, un liquide servant à humidifier les couches de nettoyage (21).

3. Contenant selon la revendication 2, dans lequel la fente est mise en œuvre au travers d'une paroi latérale du contenant qui est contiguë par rapport au compartiment.

4. Contenant selon la revendication 3, dans lequel la fente est mise en œuvre au niveau d'une région supérieure de la paroi latérale.

5. Contenant selon l'une quelconque des revendications 2 à 4, dans lequel la fente est mise en œuvre sous la forme d'une partie découpée de la paroi latérale.

6. Contenant selon l'une quelconque des revendications précédentes, dans lequel la pièce de séparation comporte une plaque ayant une distribution de pores qui recouvre une pile entière de couches de nettoyage quand celles-ci sont présentes dans le contenant.

7. Contenant selon la revendication 6, dans lequel la pièce de séparation comporte des rangées et des colonnes de pores dispersées de manière orthogonale.

8. Contenant selon l'une ou l'autre parmi la revendication 6 ou la revendication 7, dans lequel la taille et/ou le nombre de pores est/sont sélectionné(s) pour limiter la vitesse de passage du liquide au travers de la pièce de séparation en fonction d'une durée d'humidification souhaitée.

9. Contenant selon l'une quelconque des revendications précédentes, dans lequel le compartiment est défini par une pièce rapportée (11) qui est en mesure d'être retirée du contenant, pièce rapportée qui met en œuvre ou comprend ladite pièce de séparation.

10. Contenant selon l'une quelconque des revendications précédentes, dans lequel les parois latérales opposées du contenant comportent des accessoires de mise en prise (28) qui définissent un axe de renversement qui est parallèle à la partie formant base du contenant et qui est également parallèle à la pièce de séparation.

11. Contenant selon l'une quelconque des revendications précédentes, dans lequel un liquide peut être versé dans le compartiment quand l'ouverture du volume est fermée au moyen du couvercle.

12. Contenant selon l'une quelconque des revendications précédentes, comportant par ailleurs une partie saillante (32), mise en œuvre sur une région inférieure d'une paroi latérale du contenant, servant à retenir ou à supporter le contenant quand il est reposé sur son côté selon une orientation dans laquelle la partie formant base est généralement verticale et la pièce de séparation est généralement horizontale.

13. Contenant selon l'une quelconque des revendications précédentes, dans lequel le couvercle comporte une partie en retrait (22) qui sert de butée qui, quand le couvercle ferme l'ouverture, contraint une pile entière de couches de nettoyage entre le couvercle et le bac de la partie formant base à l'intérieur du volume.

14. Combinaison constituée d'un contenant selon l'une quelconque des revendications précédentes et d'une couche de nettoyage (100, 21), dans laquelle la couche de nettoyage est généralement rectangulaire en vue de dessus, disposée à l'intérieur du volume du contenant, et reposant à plat par rapport à la partie formant base du volume.
